# EUROPEAN PATENT APPLICATION

(11) **EP 2 614 983 A2**
(43) Date of publication of application: **17.07.2013**
(21) Application number: 13150411.0
(22) Date of filing: 07.01.2013
(51) Int. Cl.: B60M 3/04

(54) **Train control system**

(30) Priority: 11.01.2012 JP 2012002678
(71) Applicant: Hitachi Ltd., Tokyo 100-8280 (JP)
(72) Inventor: Imamoto, Kenji, Chiyoda-ku Tokyo 100-8220 (JP); Maekawa, Keiji, Chiyoda-ku Tokyo 100-8220 (JP); Katsuta, Keiichi, Chiyoda-ku Tokyo 100-8220 (JP); Shibata, Naoki, Chiyoda-ku Tokyo 100-8220 (JP); Sakai, Kenichi, Chiyoda-ku Tokyo 100-8220 (JP)
(74) Representative: Gill, Stephen Charles

(57) **Abstract**

In order to reduce the increase of costs related to installation and maintenance of signal equipment, the present invention provides a train control system having a power supply for supplying power from a power plant to a train, wherein a timing of power supply or a voltage waveform of supplied power is controlled for each track number in a railway station where power supply is performed electrically independently or for each section where power supply can be cut off on the track on which the train travels, so as to utilize the supplied power also as a signal for specifying the range of position of the train within the track.

## Description

### BACKGROUND OF THE INVENTION

### Field of the Invention

The present invention relates to a system, device and method for performing train control through communication between an on-board control unit mounted to each train and a track-side control unit disposed on the ground.

### Description of the Related Art

In a railroad system, traveling control is performed by a railroad signal system to prevent trains from colliding with each other. In a conventional signal system employing track circuits, only one train is permitted to be on rails in one track circuit to secure safety among trains.

Therefore, train intervals during regular service depend on the length of the track circuits. In order to provide a high-density service, shorter track circuits should be used since it is necessary to reduce the train intervals.

However, the track circuits have a drawback in that facilities need to be provided every several hundred meters, which leads to high installation and maintenance expenses for the facilities.

In a railroad security system including the signal system, from the viewpoint of cost reduction and high functionality of train control, a wireless signal system has been studied as a system for train control independent of the track circuits.

In the wireless signal system, in general, equipment mounted on a car (hereinafter, on-board equipment) computes an own train position and transmits the own train position to a control equipment located on the ground (hereinafter, track-side equipment) by radio. The track-side equipment computes a limit point for safe traveling of the train and transmits the limit point to the train.

Using the limit point as a stop target, the respective on-board equipment controls the trains themselves to be capable of safely stopping before the stop target.

In other words, safe traveling control of the train is enabled by the on-board equipment confirming the position on the track of the train on which it is disposed and the stop target.

When multiple paths such as railway stations exist on the train path, the track numbers of the trains must be specified not only to prevent collision of trains but to control dispatching of trains, so that a method is proposed to share the speed control information of trains by transmitting and receiving information between the track-side equipment and the on-board equipment.

A widely used wireless signaling method for specifying the train position utilizes a tacho-generator instead of using facilities such as track circuits and axle counters, with the aim to reduce the number of facilities disposed on the ground.

However, when tacho-generators are used, because of slipping wheels, a change in wheel diameter and the like, estimated position errors are accumulated as the traveling distance of the train increases.

Transponders are used to correct the accumulated position detection errors.

The transponders are devices that transmit position information to the on-board equipment and are provided along a railroad.

A worst value of possible position errors is assumed based on an interval of the transponders to set a margin distance for safety in a fixed manner and to calculate a stop target.

A small number of transponders and a large interval of the transponders lead to an increase in the position errors caused by the tacho-generator, and also the safety margin distance.

A large safety margin distance causes a problem such as a decrease in the service density due to the expansion of the train interval.

If the on-board equipment fails to acquire the position correction information transmitted by the transponders, the position errors increase and safety is not guaranteed by the set safety margin distance. Therefore, taking into account the failure to acquire the position correction information, the safety margin distance is set in advance to a value such that traveling is allowed for two transponders, and if the on-board equipment fails to acquire the position correction information of the two transponders in a row, safety is secured by an emergency stop.

Unfortunately, the above-mentioned method causes drawbacks such as the necessity to set the safety margin distance longer than necessary, the stopping of trains because of abnormality of transponders, or the increased number of provided transponders in order to reduce the safety margin distance, leading to an increase in costs.

A technique for solving these problems is taught in Japanese Patent Application Laid-Open Publication No. 2002-284011.

As described earlier, costs related to installation and maintenance is increased by installing equipment, such as transponders, track circuits and axle counters, for detecting the position of trains on tracks on the ground.

Further, if the on-board equipment could not recognize the position on the track of the train on which it is mounted, such as during starting of the train stopping at a railway station or during abnormalities such as power failure, a driver had to drive the train by confirming safety of the traveling direction visually or the like to a location where a transponder is located in order to confirm the position of the train on the track.

However, for position estimating methods using a tacho-generator, a GPS (Global Positioning System), an acceleration sensor, a Doppler radar and the like, it is difficult to assume an appropriate error and to set the error as the safety margin distance before traveling, because estimation accuracy continuously changes depending on the state of the train or the surrounding environment.

Therefore, it is likely that an excess safety margin distance is set.

In the case of the GPS, a large number of systems for improving the position estimation accuracy are proposed, but it is likely that errors increase because of the influence from a multi-path or a propagation delay in the ionosphere, for example, and a maximum error of the GPS is not guaranteed.

Especially in a train station having multiple tracks where tracks are arranged adjacently, it is difficult to specify the track number on which a train being started is positioned by the position estimating accuracy of the GPS. The train cannot depart the station if the track number is erroneously recognized, and safety becomes a problem when the track number is specified using wireless technology.

In an application in which position information is directly related to safety such as the railroad signal system, the use of position information, a maximum error of which is not guaranteed, could lead to a fatal failure.

The object of the present invention is to utilize the system for supplying power from a power plant to a train (hereinafter referred to as a feeding circuit system) also as a signal system, so as to enable specification of the range of position of the train within the track.

A feeding circuit system refers to a power supply system used for feeding power to the train, including a substation, a wire, a track, a third rail, or a group of power supply combining the same.

### SUMMARY OF THE INVENTION

In order to attain the object, the present invention provides a train control system having a power supply for supplying power from a power plant to a train, **characterized in that** the train control system comprises a power supply control unit for controlling a timing of feeding power by the power supply or a voltage waveform of power feed to correspond to each track number within a railway station where power supply is performed electrically independently to respective tracks or to correspond to each section of the track where power supply can be cut off on the track on which the train travels; an on-board communication equipment being activated by the power feed and transmitting a response information when the power supply control unit controls the timing of power feed, and transmitting a response information created based on a voltage waveform when the power supply control unit controls the voltage waveform; and a unit for specifying a range of position within track for specifying the range of position within the track of the train based on the control information of power feed from the power supply and the response information.

By utilizing the power supply also as a signal system, it becomes possible to specify the range of position of the train on the track.

### BRIEF DESCRIPTION OF THE DRAWINGS

Fig. 1 is a diagram showing the configuration of a train control system according to a first embodiment of the present invention;
Fig. 2 is a flowchart for explaining a control flow in an on-board equipment 2 in the first embodiment of the present invention;
Fig. 3 is a flowchart for explaining a control flow in a track-side equipment 3 according to the first embodiment of the present invention;
Fig. 4 is a view showing an image example of the configuration of a train control system according to the first embodiment of the present invention;
Fig. 5 is a view showing an image example of specifying the track number of a train in a railway station according to the first embodiment of the present invention;
Fig. 6 is a view showing a modified example of the configuration of a train control system according to the first embodiment of the present invention;

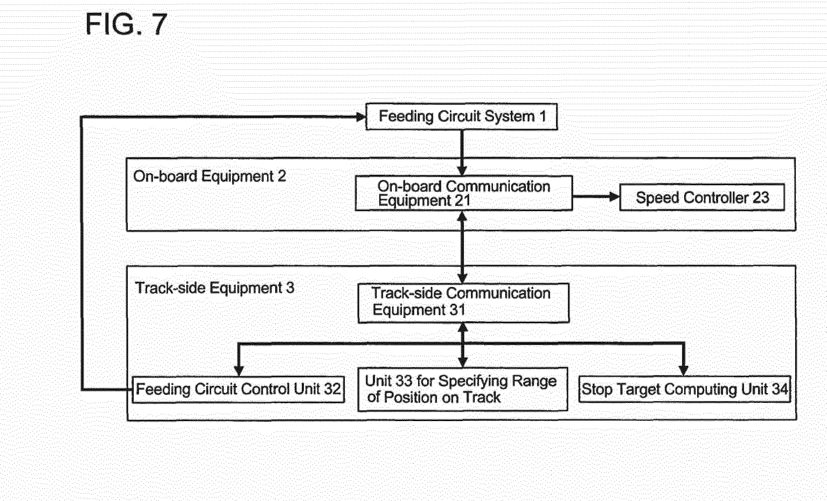

Fig. 7 is a view showing an example of configuration of the train control system according to the second embodiment of the present invention;
Fig. 8 is a view showing the control flow of the on-board equipment 2 according to the second embodiment of the present invention;
Fig. 9 is a view showing the control flow of the track-side equipment 3 according to the second embodiment of the present invention;
Fig. 10 is a view showing one example of the configuration of the train control system according to a third embodiment of the present invention;
Fig. 11 is a view showing a control flow of the on-board equipment 2 according to the third embodiment of the present invention;
Fig. 12 is a view showing a control flow of the track-side equipment 3 according to the third embodiment of the present invention;
Fig. 13 is a view showing one example of a power feed pattern according to the third embodiment of the present invention;
Fig. 14 is a view showing an image view for specifying the track number of the train in a railway station according to the third embodiment of the present invention;
Fig. 15 is a view showing a modified example of the configuration of a train control system according to the third embodiment of the present invention;
Fig. 16 is a view showing one example of the configuration when speed control is performed in the train control system according to the third embodiment of the present invention;
Fig. 17 is a view showing an image example for specifying the section of the track on which the train is positioned other than in the railway station according to a fourth embodiment of the present invention;
Fig. 18 is a view showing an image example of the configuration of a train control system according to a fifth embodiment of the present invention;
Fig. 19 is a view showing a control flow of the track-side equipment 3 according to the fifth embodiment of the present invention; and
Fig. 20 is a view showing one example of a configuration for performing speed control via the train control system according to the fifth embodiment of the present invention.

### DETAILED DESCRIPTION OF THE PREFERRED EMBODIMENTS

A best mode for carrying out the present invention will now be explained.

### [First Embodiment]

The present embodiment assumes that a train to be searched is placed in a railway station.

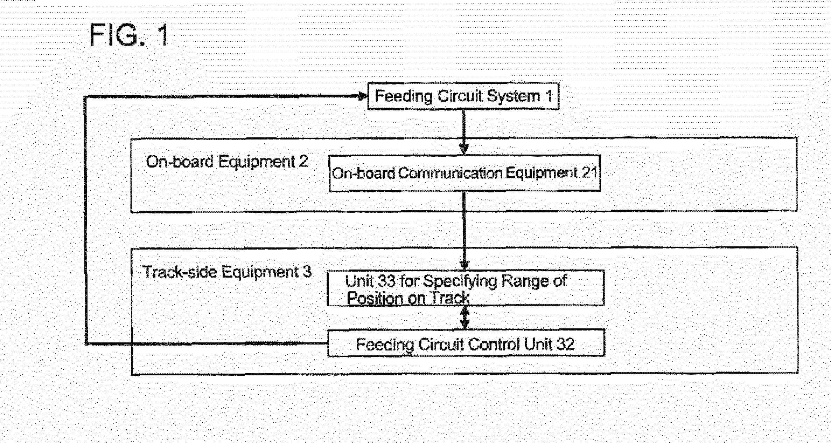

Fig. 1 illustrates the configuration of the present embodiment. According to the present embodiment, an on-board equipment 2 is composed of an on-board communication equipment 21 activated by the power fed from a feeding circuit system 1. Further, the track-side equipment 3 is composed of a feeding circuit control unit 32 for controlling the power feeding operation of the feeding circuit system, and a unit 33 for specifying range of position within track which specifies the range of position within the track of the train based on the information transmitted from the on-board equipment 2.

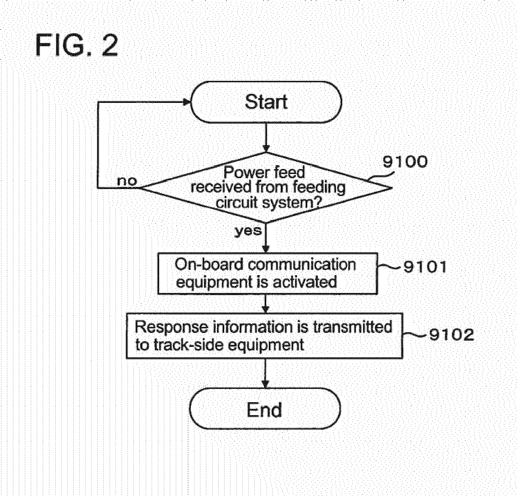

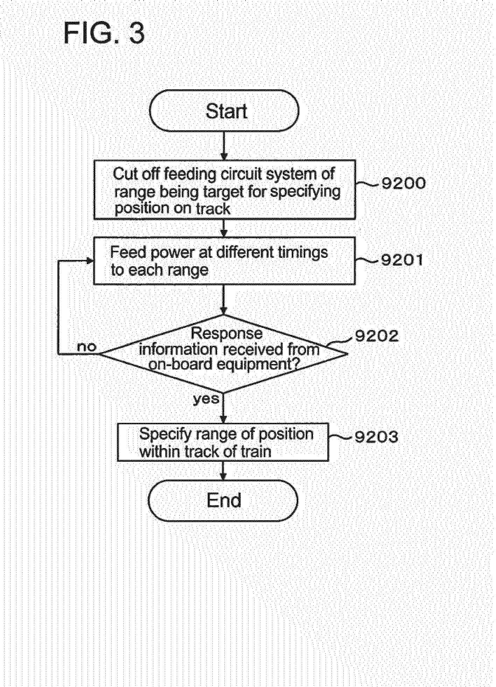

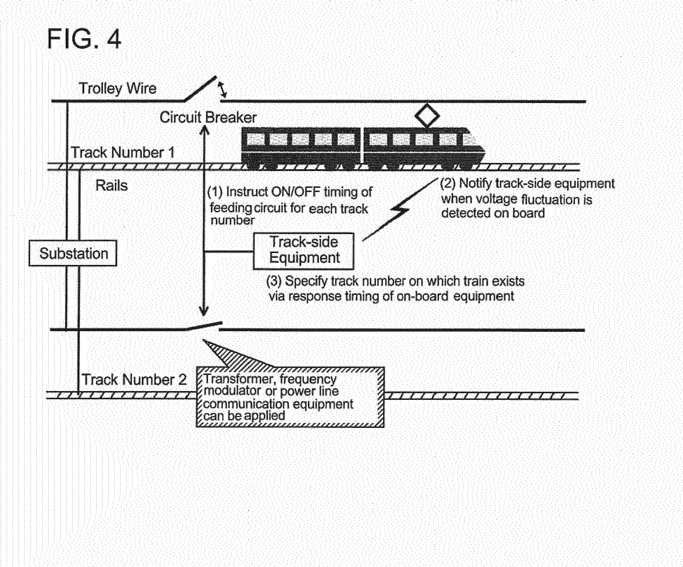

A control flow by the on-board equipment 2 according to the present embodiment is shown in Fig. 2, and a control flow by the track-side equipment 3 is shown in Fig. 3. In addition, a configuration image of the present system is illustrated in Fig. 4.

When the on-board equipment 2 receives power feed from the feeding circuit system 1 (9100), the fed power causes the on-board communication equipment 21 to be activated (9101). The activated on-board communication equipment 21 transmits a response information notifying that it has been activated to the track-side equipment 3 before the track-side equipment changes the range of power feed (9102).

The track-side equipment 3 cuts off the feeding circuit systems 1 covering the range of the track on which the train being the target of specifying the position using the feeding circuit control unit 32 travels (9200), and feeds power for a given period of time to each range of the track at varied timings (9201). During the feeding of power to the respective ranges, power is fed to a single range at a certain timing, so that power is not feed to multiple tracks simultaneously. Next, when the track-side equipment 3 receives a response information transmitted from the on-board communication equipment 21 started via power fed from the feeding circuit system 1 (9202), the unit 33 for specifying range of position within track specifies the range of position within the track in which the train exists at that timing (9203).

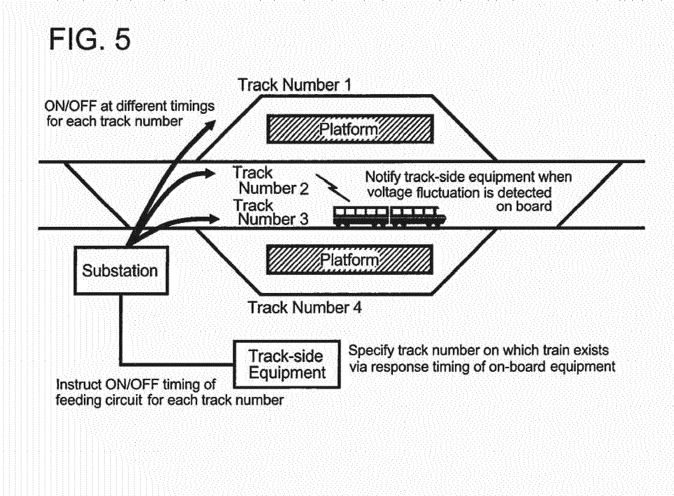

According to the above flow, the on-board communication equipment 21 is a device that operates when power feed from the feeding circuit is received, and the feeding circuit control unit 32 controls the feeding circuit system 1 so as not to feed power simultaneously to multiple tracks, so that the unit 33 for specifying range of position within track can guarantee that the train exists on the track from which the response has been received. As shown in Fig. 5, for example, in a station having track numbers 1 through 4, if the unit 33 for specifying range of position within track receive information from the on-board equipment 2 when power is fed to track number 3, it is determined that the train is on track number 3.

By designing the on-board communication equipment 21 to be activated when power is fed to the train, it becomes possible to eliminate the possibility of erroneously activating and sending positional information when there is no power feed. In that case, the on-board communication equipment 21 can be designed so that the power fed from the feeding circuit is used for activation, or so that the power supply from the feeding circuit is measured via a power feed measurement means such as a voltmeter disposed on board the train and activation is performed when a power of a given voltage or greater is fed.

However, the effect of the present invention can be achieved regardless of whether power is fed before the on-board communication equipment 21 transmits the response information or not. For example, it is possible to adopt an arrangement where the on-board communication equipment 21 transmits response information when a power feed measurement means measures the feeding of power of a given voltage or greater in the case where the on-board communication equipment 21 receives power feed from the feeding circuit or a battery.

Furthermore, the above flow adopts a system where power is not fed simultaneously to multiple tracks, but as for the range where it is already known that a train is not positioned, it is possible to continue feeding power thereto. That is, if power is fed to track number 1 and not response information has been returned, after the elapse of a given time, power is fed simultaneously to track number 2 in addition to track number 1, so that when a response information is returned, it can be determined that a train is positioned in track number 2.

As a method for controlling the feeding of power to the train via the feeding circuit control unit 32, it is possible to have the feeding circuit control unit 32 demand a substation to execute feeding of power to a specific range. Further, it is also possible to provide a circuit breaker to a feeding circuit line, a wire, a rail for return current or the like, and to open and close the circuit breaker based on the instruction from the feeding circuit control unit 32 to control the feeding of power.

It is assumed that the unit 33 for specifying range of position within track recognizes the range in which power is fed when the feeding circuit control unit 32 controls the feeding circuit system 1, and the range of the train position within the track is specified by referring to the information related to the range in which the feeding circuit control unit 32 has controlled the feeding circuit system 1 to perform power feed, and to the response information from the on-board equipment 2.

According to the above configuration, the track-side equipment 3 uses the information transmitted from the on-board equipment 2 to recognize the range of position of the train within the track, but the track-side equipment 3 can compute the range of position within the track by using the information other than the information transmitted from the on-board equipment 2. The present arrangement considers the information entered to the track-side equipment 3 without passing the on-board equipment 2, and corresponds to a case where the information obtained via an equipment disposed on the ground such as a track circuit or an axle counter is used as input to the unit 33 for specifying range of position within track. In the present configuration, the track-side equipment 3 computes the range of position of the train within the track based on the information acquired from the above-described equipment disposed on the ground in addition to the information entered from the on-board equipment 2 mounted on respective trains. The subsequent processes are the same as the processes according to the above-described configuration. Further, the present embodiment can be realized regardless of whether the means for transmitting response information from the on-board communication equipment 21 to the track-side equipment 3 is wireless or wired.

When computing the range of position of the train within the track using the unit 33 for specifying range of position within track, it is possible to perform the computation using, for example, any one of the following devices in combination with the unit 33: a track circuit, an acceleration sensor, a gyro-sensor, a tacho-generator, a transponder, a balise, radio information of a wireless LAN, an ultrasonic sensor, a Doppler radar, a camera, an infrared sensor, or an axle counter. The unit 33 for specifying range of position within track can use any one of the multiple devices listed above, or use multiple devices in combination. The device being used can be changed according to the locations of travel. The art related to position computation will not be described in detail here, because the art is used widely in prior art train control systems and car navigation systems.

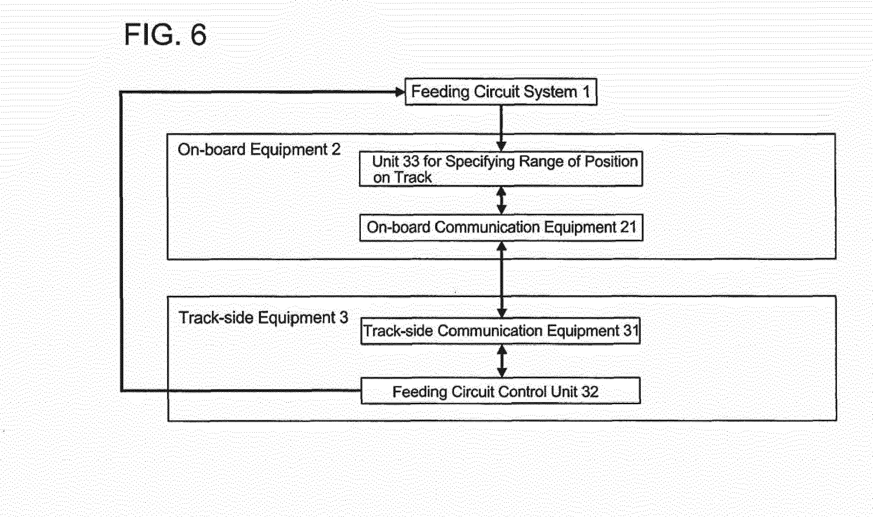

Further, as shown in Fig. 6, the unit 33 for specifying range of position within track can be mounted to the on-board equipment 2. In that case, the unit 33 for specifying range of position within track disposed on the on-board equipment 2 recognizes the timing and the range of power feed via the on-board communication equipment 21 and a track-side communication equipment 31. Thus, the unit 33 for specifying range of position within track can specify the range of position within track of the train on which it is mounted based on the power feed from the feeding circuit system 1 and the timing and range of power feed recognized in advance. The information of the specified range of position within the track can be transmitted and received via the on-board communication equipment 21 and the track-side communication equipment 31.

By adopting the present embodiment, it becomes possible to specify the range of position of the respective trains within the track through control of the feeding circuit system, according to which a superior train control system from the viewpoint of safety, service density and energy-saving of the trains can be achieved while cutting down the lifecycle cost of the railroad without having to rely on manpower and without introducing facilities such as transponders and track circuits during activation of the trains or during power failure or other failures.

### [Second Embodiment]

The present embodiment illustrates an arrangement in which speed control is performed further in addition to specifying the range of position of the train within the track according to embodiment 1. In the second embodiment, the on-board equipment 2 is composed of an on-board communication equipment 21 activated by the power supplied from the feeding circuit system 1, and a speed controller 23 for controlling the traveling of the train on which it is mounted based on a stop target information transmitted from the track-side equipment 3. Further, the track-side equipment 3 is composed of a feeding circuit control unit 32 for controlling the power feeding operation of the feeding circuit system, a unit 33 for specifying range of position within track for specifying the range of position of the train within the track based on the information transmitted from the on-board equipment 2, a stop target computing unit 34 for computing the stop target based on the range of position of the train within the track, and a track-side communication equipment 31 for transmitting the stop target to each train.

The present embodiment can be applied to a case where a train stopping at one of the tracks in a station is in a no-power-feed state due to an abnormal incident such as a power failure, and the train must be moved safely to a distant location during which speed control of the train is required. Furthermore, as described in the following embodiment 3, by adopting a method using the power feed pattern, it will not be necessary to cutoff the power feed from the feeding circuit, so that the method can be applied to a train located at a track other than the tracks within a railway station.

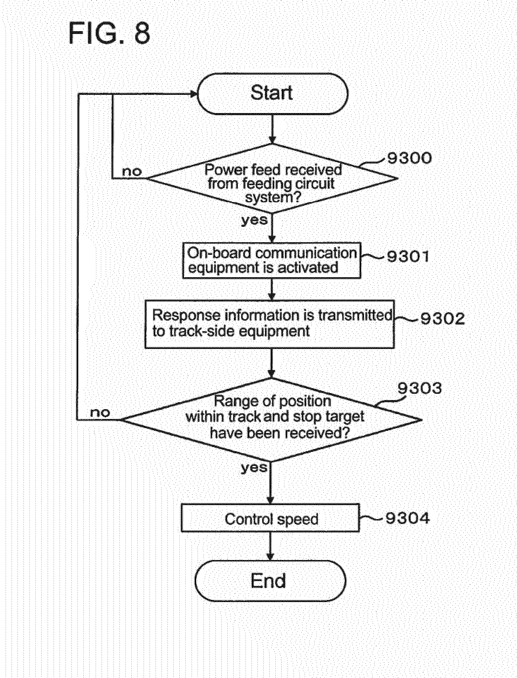

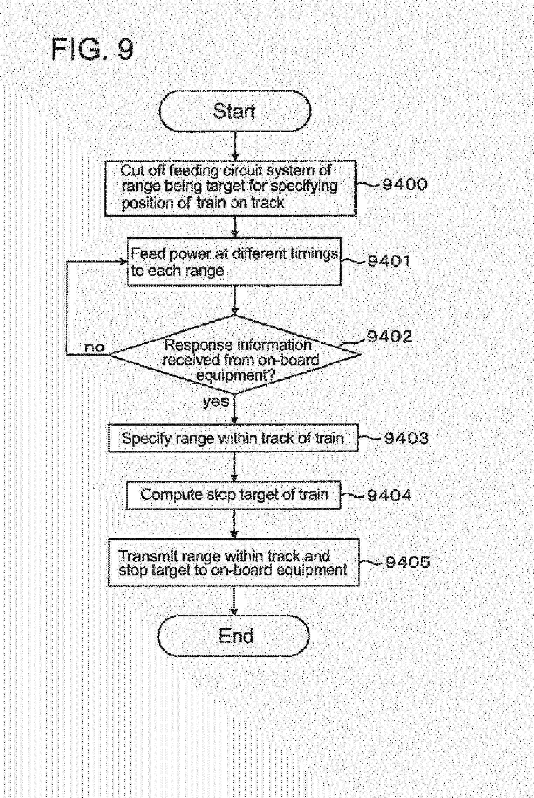

Fig. 8 illustrates a control flow by the on-board equipment 2 according to the present embodiment, and Fig. 9 illustrates a control flow by the track-side equipment 3 according to the present embodiment.

When the on-board equipment 2 receives power supply from the feeding circuit system 1 (9300), the power feed activates the on-board communication equipment 21 (9301). The on-board communication equipment 21 having been activated transmits a response information notifying that power feed has been received to the track-side equipment 3 before the power feed range is changed by the track-side equipment (9302). When the on-board communication equipment 21 receives the information on the range of position within the track and the stop target information from the track-side equipment 3 (9303), the speed controller 23 controls the traveling speed so that the train can stop safely at the stop target (9304).

The track-side equipment 3 cut offs all the feeding circuit systems 1 within the range of the track on which the train travels being the target for specifying the position on the track using the feeding circuit control unit 32 (9400), and feeds power for a given period of time to each range of the track at different timings (9401). When feeding power to each range of the track, power is fed only to a single range at a certain timing, so that power is not fed simultaneously to multiple tracks. Next, in the track-side equipment 3, when the track-side communication equipment 31 receives the response information transmitted from the on-board communication equipment 21 activated by the power fed from the feeding circuit system 1 (9402), the unit 33 for specifying range of position within track specifies the range of position within the track of the train according to that timing (9403), and the stop target computing unit 34 computes a stop target position of the train based on the specified range of position within track (9404), based on which the track-side communication equipment 31 transmits the specified range of position within track and the stop target position information to the on-board equipment 2 (9405).

In an existing system, various methods can be applied to realize the arts and methods related to the above-described stop target computing unit 34, the speed controller 23, the on-board communication equipment 21 and the track-side communication equipment 31. Although not described in detail here, patent literature 1 discloses a method for creating a stop pattern in block units and transmitting the stop target position block information as digital information.

When the traveling speed is controlled via the speed controller 23, computation can be performed, in addition to the following two information of the range of position of the train within the track and the distance to the stop target, using at least one of the following information: traveling speed, terrain information (such as the curvature or the gradient of the travel path), and vehicle performance (motor performance, brake performance, weight and so on). Various known arts related to the method for computing the traveling speed considering service density and energy saving while ensuring safety can be adopted.

Preferably, the on-board equipment 2 or the track-side equipment 3 is equipped with a monitor and has a means for displaying the status of processes of the respective equipment on the monitor, or has a means for notifying the status of processes via audio.

In the embodiment described above, the track-side equipment 3 transmits the stop target information to the on-board equipment 2, but it is also possible to transmit the speed limit of the train at the respective locations instead of the stop target information to the on-board equipment 2.

### [Third Embodiment]

The first and second embodiments adopted a method for cutting off the feeding circuit systems 1 located within the range of the target for specifying the location of position of the train within the track, and feeding power to each range at different timings. The third embodiment adopts a method for specifying the range of position of the train within the track by feeding power via a specific power feed pattern to the respective ranges being the target for specifying the position within the track, instead of cutting off the feeding circuit systems 1. The present embodiment enables to feed power simultaneously to multiple areas, and since it is not necessary to cut off power feed to the respective ranges, it becomes possible to suppress the influences on train services.

The present embodiment assumes that the train to be searched is at a railway station.

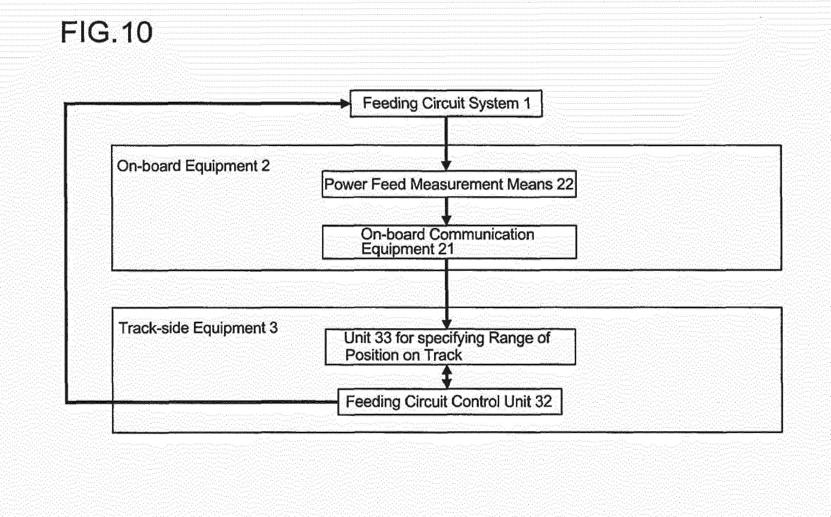

Fig. 10 illustrates the configuration of the third embodiment. The on-board equipment 2 is equipped with a power feed measurement means 22 for measuring the power feed pattern of the feeding circuit system 1 controlled via the feeding circuit control unit 32, and the on-board communication equipment 21 transmits a response information to the track-side equipment 3 based on the power feed pattern measured via the power feed measurement means 22. The track-side equipment 3 is composed of a feeding circuit control unit 32 for controlling the power feed pattern of the feeding circuit system 1, and a unit 33 for specifying the range of position within track for specifying the range of position of the train within the track based on the response information from the on-board equipment 2.

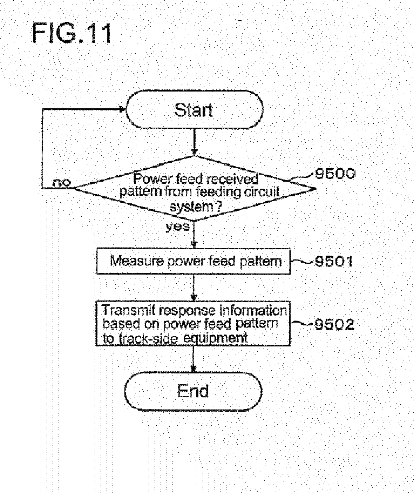

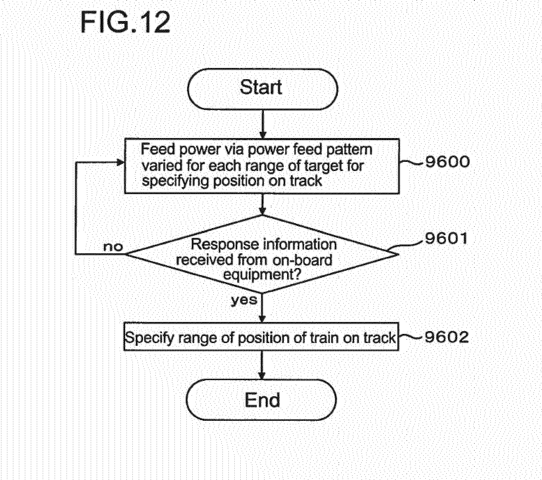

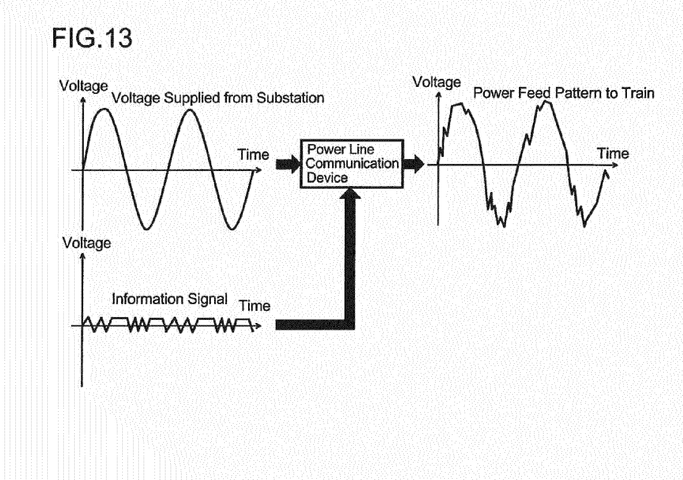

Fig. 11 shows a control flow by the on-board equipment 2 according to the present embodiment, and Fig. 12 shows a control flow by the track-side equipment 3 according to the present embodiment. In addition, an image of the actual power feed pattern is shown in Fig. 13.

When the on-board equipment 2 receives a power feed pattern from the feeding circuit system 1 (9500), the power feed measurement means 22 measures the power feed pattern (9501), and transmits a response information corresponding to the received power feed pattern to the unit 33 for specifying range of position within track (9502).

The track-side equipment 3 utilizes the feeding circuit control unit 32 to perform power feed via respective power feed patterns to the respective ranges being the target for specifying the range of position within track (9600). Next, when the track-side equipment 3 receives the response information transmitted from the on-board communication equipment 21 based on the power feed pattern by the feeding circuit system 1 (9601), the unit 33 for specifying range of position within track computes the range of position within the track where the train exists based on the response information (9602).

It is assumed that the unit 33 for specifying range of position within track recognizes the power feed pattern controlled by the feeding circuit control unit 32 and the range thereof, and can specify the range of position within the track by verifying the information on the power feed pattern realized by the feeding circuit control unit 32 controlling the feeding circuit system 1 and the range thereof with the response information from the on-board equipment 2. Control can be performed via power feed patterns that differ according to each range to be specified, and if power feed is performed via power feed patterns that differ among all of the multiple sections belonging to the range being the target of search of position of the train within the track, it becomes possible to search the location of the train via sectional units. The response information can use the received power feed pattern itself, and any information can be used as long as it includes the information that a specific power feed pattern has been received. In that case, the unit 33 for specifying range of position within track should recognize the response information based on the respective power feed patterns.

In the first and second embodiments, a circuit breaker is disposed on the feeding circuit system 1 to cutoff the feeding of power to the on-board equipment 2 disposed on the train positioned at sections excluding the search range, and the opening/closing of the circuit breaker is controlled by the instructions from the feeding circuit control unit 32. The third embodiment only requires a configuration to feed a specific power feed pattern to the on-board equipment 2, so that not only a circuit breaker but also a transformer, a frequency modulator, or a transmitter for power line communication can be disposed on the feeding circuit system 1. For example, when a transformer is used, a power feed pattern having varied the voltage of supplied power for each section can be generated, and when a frequency modulator is used, a power feed pattern having varied the frequency of supplied power for each section can be generated. When a transmitter for power line communication is used, a power feed pattern having superposed a specific pattern signal to the supplied power for each section can be generated. In other words, a power feed pattern that does not influence the service of the trains can be set by applying these devices. Fig. 13 illustrates an example of a power feed pattern in which an information signal has been added to the power supplied from the substation using a power line communication equipment. By superposing a power having a higher frequency and lower amplitude than the voltage supplied from the substation as information signals, it becomes possible to feed power via the feeding circuit while also transmitting information thereby. The added information signals can be extracted using a power feed measurement means for measuring the voltage fluctuation. Further, it is possible to use the amplitude and the frequency of the supplied power itself from the substation as information signals through use of transformers or frequency modulators instead of superposing information signals to the supplied power.

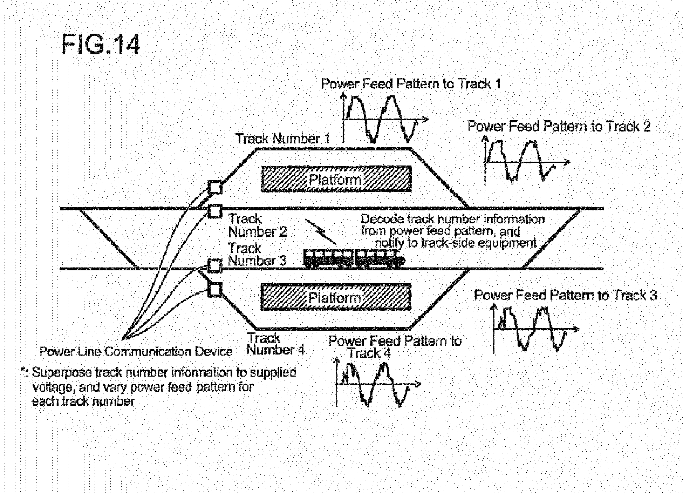

Fig. 14 illustrates a method for specifying the track number of a train at a station having track numbers 1 through 4. The feeding circuit control unit 32 feeds power via a power feed pattern having superposed different information signals for each track number, so that waveforms of the power feed patterns supplied to the respective track numbers differ corresponding to the information signals. The on-board equipment 2 measures the voltage fluctuation of the information signals being superposed on the power feed pattern via the power feed measurement means, and when an information signal specifically known as track number 3 is measured, it can be determined that the train is located on track number 3. Further, by including both the information of the received power feed pattern and the train information to the response information that the train having received the power feed pattern transmits, it becomes possible to simultaneously specify which train is positioned on which track when multiple trains are located on multiple tracks. In other words, it is possible to specify at once which train is positioned on which track when trains are located respectively to track numbers 1 through 4. Moreover, since power can be fed to each of the multiple tracks via the feeding circuit, the present embodiment can be applied to a state where the trains are not at a stopped state. For example, the present embodiment can be used as a means for confirming the track number to which the train entering the railway station has traveled.

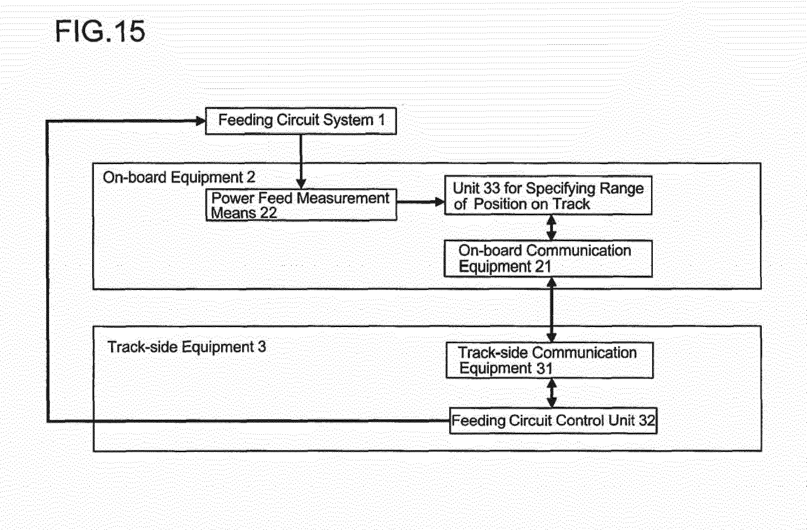

Further, similar to the first embodiment, the unit 33 for specifying range of position within track can be disposed on board the train. Fig. 15 illustrates a configuration in which the on-board equipment 2 is equipped with the unit 33 for specifying range of position within track. When the unit 33 for specifying range of position within track is disposed on board the train, by the unit 33 for specifying range of position within track recognizing the power feed patterns of the respective ranges in advance, the on-board equipment 2 can specify the range of position within the track of the train on which it is mounted based on the power feed pattern measured via the power feed measurement means 22 without communicating with the track-side equipment 3. That is, the on-board communication equipment 21 and the track-side communication equipment 31 are not essential in order to specify the range of position of the train within the track. In order to notify the specified range of position of the train within the track other than on-board the train, it is merely necessary to communicate data via an on-board communication equipment 21 and a track-side communication equipment 31.

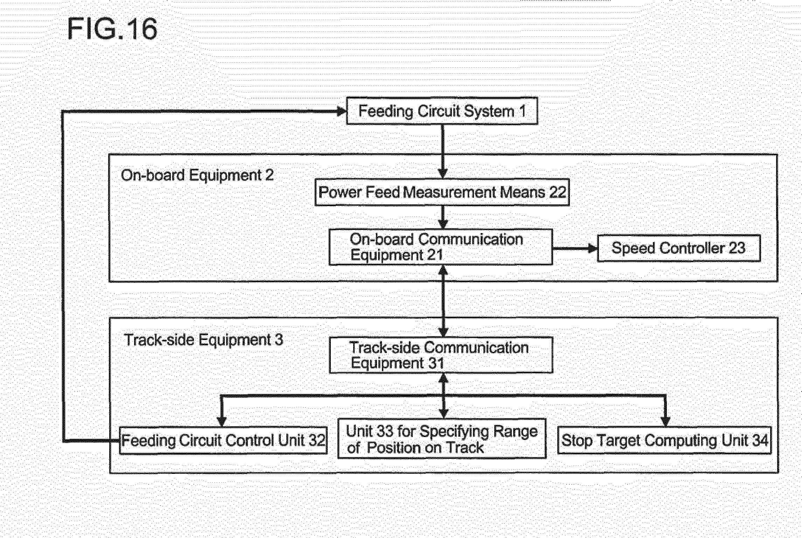

Similar to the second embodiment, when speed control is to be performed, the configuration can be equipped with a stop target computing unit 34 for computing the stop target based on the specified range of position within track and a speed controller 23 for controlling speed based on the stop target information, as shown in Fig. 16.

Further, unlike embodiment 2, since the power fed from the feeding circuit is not cut off according to the present embodiment, the present embodiment is applicable to traveling trains.

The portion of the control flow of Figs. 8 and 9 prior to transmission of response information should be replaced with the flow of the third embodiment.

In the method for specify the range of position within the track based on the power feed pattern from the feeding circuits, it may be possible that a noise added to the signals causes the power feed pattern to be recognized as a pattern that differs from the original pattern, according to which the range of position within track may be erroneously recognized. In order to cope with this problem, when a power line communication technique is applied, for example, measures to cope with noises on the path of the feeding circuit system 1 can be enabled by introducing a coding technique to the contents of communication, according to whichi the reliability of the specification of the range of position within the track can be enhanced.

As described, according to the present embodiment, the number of track-side facilities can be reduced, according to which installation and maintenance costs can be reduced, and safe train control that does not require manpower can be realized.

### [Fourth Embodiment]

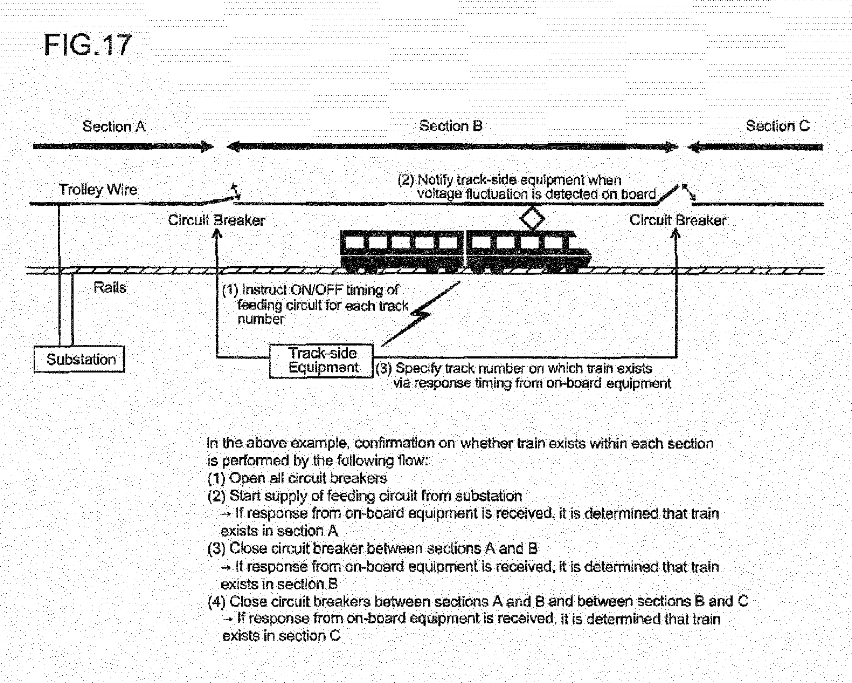

According to the fourth embodiment, the range in which the unit 33 for specifying the range of position within track searches the train is not restricted to the area within railway stations, and the position of the train in the track can be specified also in areas other than railway stations. The configuration image of the present embodiment is shown in Fig. 17. The present embodiment illustrates a method using an on-board communication equipment 21 started by the power fed from the feeding circuit.

The configuration of the present embodiment can be realized by the configuration of the first to third embodiments. Here, the system for starting the on-board communication equipment by feeding of power according to the first embodiment is adopted for explanation.

The track-side equipment 3 opens the circuit breaker of the range within the track on which the train being the target for specifying the position within the track using the feeding circuit control unit 32 travels. Next, the supply of feeding circuit via the substation is started, and if the unit 33 for specifying range of position within track receives response information, it is determined that the train exists on the track in section A. If response information has not been returned after the elapse of a certain time, the circuit breaker between sections A-B is closed, and whether response information has been returned or not is confirmed. If response information has been received, it is determined that the train exists on the track in section B, but if response information has not been returned after the elapse of a certain time, the circuit breaker between sections B-C is closed, and whether response information has been returned or not is confirmed. Thereafter, the circuit breaker of the sections specifying the range of position of the train within the track is closed sequentially in order, and whether response information has been returned or not is confirmed, according to which the range of position within the track can be obtained.

According to the fourth embodiment, the power feed sections are expanded in the following order; "section A", "section A + section B", and "section A + section B + section C". However, depending on the position and number of substations, it is possible to feed power at different timings to section A, section B and section C, respectively, or to feed power to the respective sections via specific power feed patterns as in the third embodiment. In that case, specific power feed patterns can be transmitted to the respective sections by disposing to each of the sections of the track being the target of specification a substation, a transformer, a frequency modulator, or a transmitter for power line communication.

### [Fifth Embodiment]

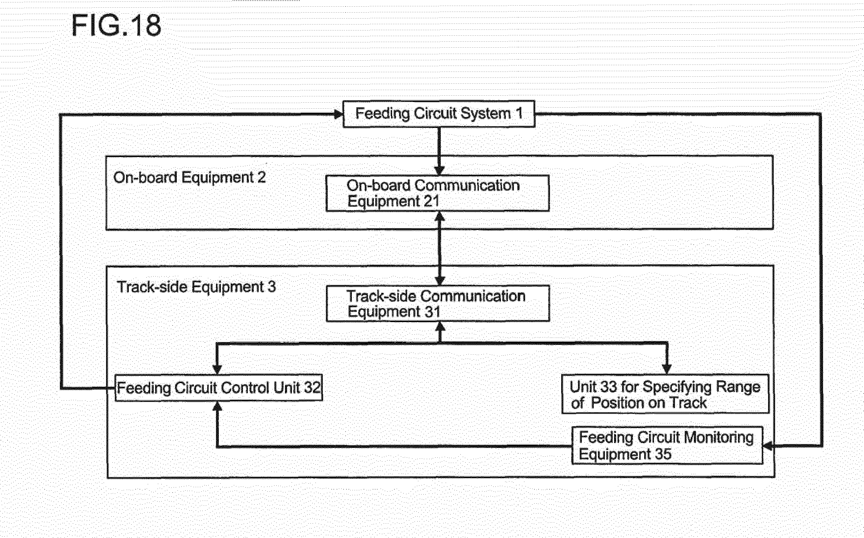

The above-described first to fourth embodiments assume that the feeding circuit control unit 32 is capable of controlling the power feed to an intended area or the power feed pattern without fail. In the fifth embodiment, it is assumed that there is a possibility that incidents such as feeding of power to an erroneous range or feeding of power having an erroneous power feed pattern may occur, and therefore, the track-side equipment 3 is equipped with a feeding circuit monitoring equipment 35 for monitoring that an intended power feed to an intended range or a power feed control via an intended power feed pattern is actually performed by the feeding circuit control unit 32. The configuration of the present embodiment is shown in Fig. 18.

The feeding circuit monitoring method using the feeding circuit monitoring equipment 35 according to the present embodiment can be applied to any one of the first to fourth embodiments.

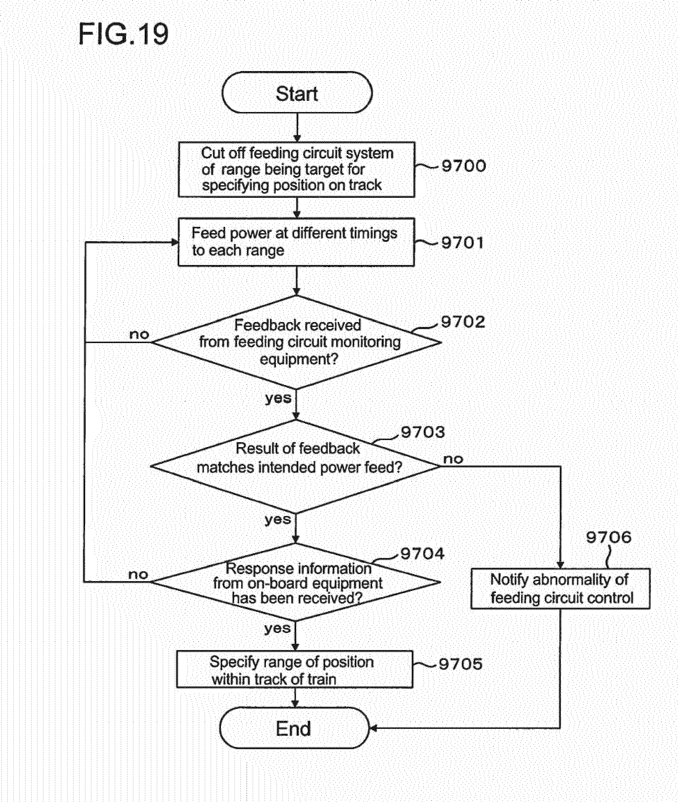

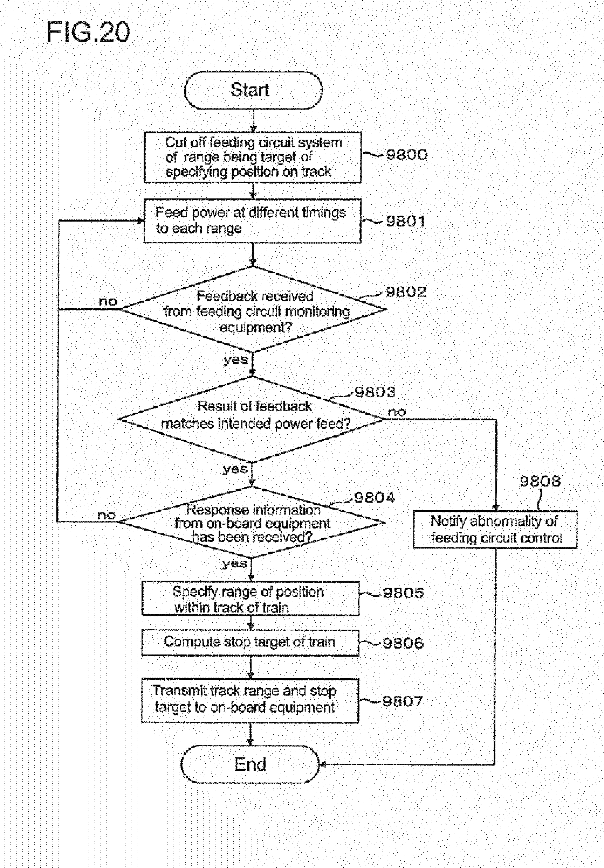

As one example, a control flow by the track-side equipment 3 when the present embodiment is applied to the control flow of the first embodiment is illustrated in Fig. 19, and a control flow when the present embodiment is applied to the control flow of the second embodiment is illustrated in Fig. 20. The control flow of on-board equipment 2 can be similar to embodiment 8. Further, the present embodiment can be added in a similar manner to the control flow of the third and fourth embodiments, so that detailed description is not illustrated here.

The track-side equipment 3 cuts off the feeding circuit systems 1 arranged within the range of the track on which the train being the target for specifying the position on the track using the feeding circuit control unit 32 travels (9700), and feeds power for a certain period of time to each range at different timings (9701). After feeding of power is started, when the feeding circuit control unit 32 receives the result of feedback from the feeding circuit monitoring equipment 35 for measuring and monitoring the power feed status (9702), the unit confirms that the feedback result matches the intended result (that the power feed within the cutoff target range has been cut-off without fail) (9703). If the feedback result matches the intended result and the track-side communication equipment 31 receives the response information transmitted from the on-board communication equipment 21 having been activated by the power feed from the feeding circuit system 1 (9704), the unit 33 for specifying range of position within track specifies the range of position within the track on which the train exists in response to the timing (9705). If the result of feedback does not match the intended result, the feeding circuit control unit 32 assumes that an abnormality has occurred in the control of the feeding circuit, and the unit notifies the abnormality of control of the feeding circuit system to the operator of the track-side equipment 3 (9706).

In order to perform speed control, as shown in Fig. 20, the range of position of the train within the track is specified via a similar control flow as Fig. 19 (9805), and thereafter, the stop target of the train is computed based on the range of position of the train within the track (9806). Then, the information on the range of position within track and the stop target information are transmitted to the on-board equipment (9807).

The above-mentioned feeding circuit monitoring equipment 35 can be realized by providing a voltmeter or a current meter to a feeding circuit wire, a wire, or a return current rail and so on. The feeding circuit monitoring equipment 35 measures the status of power feed by the feeding circuit system 1, and performs feedback of the measurement location information and the measurement result to the feeding circuit control unit 32. The feeding circuit control unit 32 confirms whether erroneous power feed is performed or not by confirming the feedback result. Based on the present configuration, the abnormality of feeding circuit control can be detected immediately.

Further, the feeding circuit control unit 32 can perform power feed using a test pattern in order to verify the operation of the feeding circuit monitoring equipment 35 and the feeding circuit control unit 32. By performing the present process, for example, if the feeding circuit monitoring equipment 35 does not perform correct feedback of the test pattern, it can be determined that abnormality has occurred in the feeding circuit system 1, the feeding circuit control unit 32, or the feeding circuit monitoring equipment 35.

Further preferably, the on-board equipment 2 or the track-side equipment 3 is equipped with a monitor, and when abnormality has been detected in the respective equipment, the status thereof is displayed on the monitor, or in another example, the equipment is equipped with a means for notifying the status of process via audio. Furthermore, it is possible to provide a monitor 4 to any one of the first to fourth embodiments, so as to enable the status of control of the feeding circuit system 1 of the feeding circuit control unit 32, the train information specified via the unit for specifying range of position within track, or the information on the speed control or instructions of the of the train to be displayed or notified via audio.

### [Industrial Applicability]

The present invention targets a train control system.

## Claims

1. A train control system having a power supply for supplying power from a power plant to a train, **characterized in that** the train control system comprises:
a power supply control unit for controlling a timing of feeding power by the power supply or a voltage waveform of power feed to correspond to each track number within a railway station where power supply is performed electrically independently to respective tracks or to correspond to each section of the track where power supply can be cut off on the track on which the train travels;
an on-board communication equipment being activated by the power feed and transmitting a response information when the power supply control unit controls the timing of power feed, and transmitting a response information created based on a voltage waveform when the power supply control unit controls the voltage waveform; and
a unit for specifying a range of position within track for specifying the range of position within the track of the train based on the control information of power feed from the power supply and the response information.

2. The train control system according to claim 1, **characterized in that**
the power supply control unit performs power feed at timings that differ for each track number;
the on-board communication equipment is activated by receiving the power feed from the power supply; and
the unit for specifying range of position within track verifies the timing at which the response information is received and the control information of the timing of the power feed via the power supply control unit, and specifies the range of position of the train within the track.

3. The train control system according to claim 1, **characterized in that**
the power supply is equipped with a circuit breaker capable of cutting off power feed to each section respectively;
the power supply control unit controls the circuit breaker and performs power feed at different timings to each section;
the on-board communication equipment is activated by receiving the power fed from the power supply; and
the unit for specifying range of position within track verifies a timing at which the response information has been received and a control information of timing of power feed by the power supply control unit, and specifies the range of position of the train within the track.

4. The train control system according to claim 1, **characterized in that**
the power supply control unit performs power feed via a power having a voltage waveform that differs for each track number;
a power feed measurement means for measuring the voltage waveform is disposed on board the train;
the on-board communication equipment transmits a response information generated based on the voltage waveform measured via the power feed measurement means; and
the unit for specifying range of position within track verifies the response information and the control information of the voltage waveform via the power supply control unit to specify the range of position of the train within the track.

5. The train control system according to claim 1, **characterized in that**
the power supply is equipped with a circuit breaker capable of cutting off power feed of each section;
the power supply control unit controls the circuit breaker and performs power feed by an electric power having a voltage waveform that differs for each section;
a power feed measurement means for measuring the voltage waveform is disposed on board the train;
the on-board communication equipment transmits a response information generated based on the voltage waveform measured via the power feed measurement means; and
the unit for specifying range of position within track verifies the response information and the control information of the voltage waveform via the power supply control unit to specify the range of position of the train within the track.

6. The train control system according to any one of claims 1 through 5, **characterized in that**
when the unit for specifying range of position within track is disposed on board the train;
the system comprises a track-side communication equipment for transmitting the timing of power feed or the control information on the voltage waveform of supplied power via the power supply control unit to the on-board communication equipment; and
the on-board communication equipment transmits the control information received from the track-side communication equipment to the unit for specifying range of position within track.

7. The train control system according to any one of claims 1 through 6, **characterized in that** the system further comprises:
a stop target computing unit for computing a stop target based on the specified range of position of the train within the track; and
a speed controller for controlling the traveling speed of the train on which it is disposed based on the stop target information.

8. The train control system according to claim 7, **characterized in that**
when controlling traveling speed via the speed controller, the train control system
uses the range of position of the train within the track and a distance to the stop target; or
in addition to the range of position of the train within the track and the distance to the stop target,
uses at least one of the following information: a traveling speed of the train, a motor performance, a brake performance, a weight, a curvature of a travel path, a gradient, a range of position of the train within the track specified by the unit for specifying range of position within track, and a distance to a stop target computed by the stop target computing unit.

9. The train control system according to claim 4 or claim 5, **characterized in that**
the power supply includes at least one of the following equipment;
a transformer capable of changing a voltage of the supplied power for each track number or each section;
a frequency modulator capable of changing a frequency of the supplied power for each track number or each section; and
a power line communication equipment capable of superposing a pattern signal to the supplied power for each track number or each section.

10. The train control system according to claim 9, **characterized in that**
by applying a communication coding technique when controlling the power supply, the system can detect or eliminate noises on a power supply path.

11. The train control system according to any one of claims 1 through 10, **characterized in that**
the unit for specifying range of position within track specifies the range of position of the train within the track by using, when specifying the range of position of the train within the track;
information acquired by using at least one of the following equipment: a track circuit, an acceleration sensor, a gyrosensor, a tacho-generator, a transponder, a balise, a radio wave information of a wireless LAN, an ultrasonic sensor, a Doppler radar, a camera, an infrared sensor, and an axle counter; and
the response information.

12. The train control system according to any one of claims 1 through 11, **characterized in that** the system further comprises
a power supply monitoring equipment for monitoring a power feed status via the power supply, and communicating a result of measurement of the power feed status to the power supply control unit;
the power supply control unit verifies a timing of the power feed or a control information of the voltage waveform of the supplied power, and the result of measurement performed via the power supply monitoring equipment; and
a means for determining abnormality when the control information and the measurement result do not correspond.

13. The train control system according to claim 12, **characterized in that**
the power supply control unit performs test power supply using power at an arbitrary timing or having an arbitrary voltage waveform regardless of whether a train exists on the relevant track number or the relevant section.

14. The train control system according to claim 12 or claim 13, **characterized in that**
when the power supply control unit determines that abnormality has occurred, a warning is output.

15. The train control system according to any one of claims 1 through 13, **characterized in that** the system comprises:
a monitor for displaying a processing status for specifying the range of position of the train within the track, or a means for notifying the processing status via audio, or both.
